# EUROPÄISCHE PATENTANMELDUNG

(11) **EP 3 587 801 A1**
(43) Veröffentlichungstag der Anmeldung: **01.01.2020**
(21) Anmeldenummer: 19181788.1
(22) Anmeldetag: 21.06.2019
(51) Int. Cl.: F03D 1/06

(54) **ROTORBLATT MIT STEG IN WABENSANDWICHBAUWEISE**

(30) Priorität: 26.06.2018 DE 102018005030
(71) Anmelder: SENVION GmbH, 22297 Hamburg (DE)
(72) Erfinder: BENDEL, Urs, 24787 Fockbek (DE)
(74) Vertreter: Groth, Wieland

(57) **Zusammenfassung**

Rotorblatt mit einem Steg (1), der eine Sandwichbauweise aufweist, wobei ein Sandwichkern des Stegs (1) Wabenplatten (2) aufweist und eine Außenseite (6) der Wabenplatten (2) eine Prepregaußenlage (3) aufweist und eine Innenseite (7) der Wabenplatten (2) eine Prepreginnenlage (4) aufweist.

## Beschreibung

Die Erfindung betrifft ein Rotorblatt mit einem Steg nach dem Oberbegriff des Anspruchs 1. Die Erfindung betrifft auch ein Verfahren zur Fertigung eines Stegs eines Rotorblatts.

Rotorblätter mit Stegen sind natürlich im Stand der Technik hinlänglich bekannt.

Beispielsweise ist aus der DE 10 2016 011 757 ein Rotorblatt mit einem Hinterkantenabschlusssteg bekannt. Der Hinterkantenabschlusssteg ist als Laminatbauteil in einer Sandwichbauweise ausgebildet mit Sandwichkernmaterialien unterschiedlicher spezifischer Dichte. Zur Herstellung des Abschlussstegs wird ein Infusionsverfahren verwendet, bei dem sowohl die Sandwichkernmaterialien als auch die auf die Sandwichkernmaterialien aufgebrachten Gewebe- und Gelegelagen mit einem Harz infundiert werden. Es entsteht ein vollständig mit Harz infundierter Steg mit einem Gewicht, das in der Größenordnung von etwa 100 kg bis 130 kg pro m³ liegt.

Ein hohes Gewicht des Rotorblattes ist nachteilig, da das Gewicht durch die Rotation der Rotorblätter in Umfangsrichtung zu Materialermüdungen führt. Es ist daher grundsätzlich von Vorteil, Rotorblätter oder die Bauteile der Rotorblätter mit geringeren Gewichten zur Verfügung zu stellen, die auch geringere Lasten erzeugen.

Es ist daher Aufgabe der Erfindung, ein Rotorblatt zur Verfügung zu stellen, das einen Steg mit einem geringeren Gewicht aufweist, und es ist Aufgabe der Erfindung, ein Verfahren zur Herstellung eines Steges mit einem geringeren Gewicht zur Verfügung zu stellen.

Die Erfindung wird hinsichtlich des Rotorblattes mit einem Rotorblatt mit den Merkmalen des Anspruchs 1 erfüllt.

Die Aufgabe wird hinsichtlich des Verfahrens durch ein eingangs genanntes Verfahren mit den Merkmalen des Anspruchs 10 erfüllt.

Das erfindungsgemäße Rotorblatt umfasst einen erfindungsgemäßen Steg, der eine Sandwichbauweise aufweist.

Üblicherweise sind Stege plan ausgebildete Bauteile mit einer abschnittsweise gleichbleibenden Dicken, deren Breite aber in Abhängigkeit von den inneren Abmessungen des Rotorblattes über ihre Länge in Längsrichtung kontinuierlich variiert.

Bekannte Stege umfassen ein Sandwichkernmaterial, üblicherweise aus einem Schaum oder Balsaholz. Sie sind auf der Innenseite und der Außenseite mit einem Gelege oder Gewebe aus Fasern oder mit Fasern oder einer Kombination von allem belegt. Dieser Sandwichaufbau wird anschließend in einem Vakuuminfusionsverfahren mit vorzugsweise einem Zwei-Komponenten-Harz oder einem anderen Harz infundiert, das nach Erhitzen aushärtet und nicht nur die Gewebe- und Gelegelagen durchdringt, sondern auch den Sandwichkern des Sandwichaufbaus, also den Schaum oder das Balsaholz. Durch die Infusion des Harzes erhält der Steg ein erhebliches Gewicht.

Unter Innenseiten und Außenseiten sind hier die sich gegenüberliegenden großen Seitenflächen zu verstehen, wobei die Außenseite bei der Herstellung in der Herstellungsform außen und die Innenseite während der Herstellung in der Herstellungsform innen liegt.

Der erfindungsgemäße Steg hingegen ist zwar auch in einer Sandwichbauweise aufgebaut, jedoch weist der Sandwichkern des Steges Wabenplatten auf. Auf eine Innenseite der Wabenplatten ist eine Prepreginnenlage gelegt, und auf eine Außenseite der Wabenplatten ist eine Prepregaußenlage gelegt.

Wabenplatten sind Kunststoffplatten mit einer bienenwabenartigen Struktur. Sie weisen über ihre gesamte Ausdehnung eine vorzugsweise gleiche Dicke auf. Sie werden üblicherweise entlang ihrer Länge und Breite auf eine gewünschte Form zugeschnitten.

Prepreg (pre-impregnated fibres) sind mit Harz vorimpregnierte Fasern. Die Fasern können Gelege und oder Gewebe oder auch unidirektionale Fasern umfassen oder Mischungen aus den vorgenannten, vorzugsweise textilen Materialien sein. Die Prepregs können als Rollenware zur Verfügung gestellt werden. Sie härten unter Temperatur und Druck endgültig aus.

Der fertige Steg weist ausgehärtete Prepreglagen auf, so dass der Steg eine hinreichende Stabilität erhält.

Günstigerweise ist der Steg zwischen einem auf der Saugseite angeordneten Gurt und einem auf der Druckseite angeordneten Gurt des Rotorblattes angeordnet. Es ist jedoch auch denkbar, dass der Steg als Hinterkantenabschlusssteg oder anderweitig verwendet wird und nicht unbedingt zwischen zwei Gurten angeordnet sein muss. Üblicherweise ist jedoch der erfindungsgemäße Steg zwischen zwei Hauptgurten angeordnet, da der Steg dort besonders große Abmessungen hat und die Gewichtersparnis durch die Wabenbauweise erheblich größer ist als bei anderen Stegen.

Vorzugsweise sind die Waben der Wabenplatten mit Luft gefüllt. Allenfalls an den seitlichen Rändern der Wabenplatten verkleben die Prepreglagen beidseitig mit den Wabenplatten, jedoch findet keine vollständige Durchdringung der Waben mit dem Harz statt. Da die Waben im Wesentlichen mit Luft gefüllt sind, ergibt sich somit eine erhebliche Gewichtersparnis gegenüber vollständig infundierten Sandwichkernen.

Günstigerweise schließen sich im Sandwichkern an die Wabenplatten entlang ihrer Längsseiten Endstücke an. Die Endstücke bestehen günstigerweise aus Balsaholz, Schaum oder einem anderen leicht in eine Form bringbaren oder verformbaren Material. Die Endstücke sind mit der Wabenplatte auf Stoß gefertigt und fluchten auf der Innenseite und der Außenseite mit der Wabenplatte. Eine Breite der Endstücke ist der in Längsrichtung veränderlichen Breite des Innenraumes des Rotorblattes zwischen den Hauptgurten angepasst. Sie füllen den Abstand zwischen Wabenplatte und Rotorblattinnenwandung aus. Des Weiteren sind die Endstücke der Winkelstellung des Stegfußes auf der Innenseite der Rotorblattschalen angepasst.

Der Sandwichkern ist mit einer weiteren Prepreglage vorzugsweise vollständig umschlossen. Die weitere Prepreglage hält günstigerweise die Endstücke positionsfest an der Wabenplatte. Die weitere Prepreglage ist günstigerweise zuzüglich der Prepreginnenlage und der Prepregaußenlage vorgesehen.

In einer bevorzugten Ausführungsform des erfindungsgemäßen Rotorblattes bzw. des erfindungsgemäßen Steges ist entlang wenigstens einer der Steglängsseiten, vorzugsweise entlang beider Steglängsseiten, jeweils ein Stegfuß ausgebildet, der zwei seitlich entlang des Endstückes angeordnete Füllkörper umfasst, wobei sich eine Prepregfußlage fußseitig eines ersten wie auch eines zweiten Füllkörpers erstreckt und einen im Wesentlichen T-förmig ausgebildeten Stegfuß ausbildet, der als Klebeflansch verwendet wird, um den Stegfuß auf dem Hauptgurt oder anderweitig aufzukleben und/oder aufzulaminieren. Die Füllkörper sind im Wesentlichen im Querschnitt dreieckförmig ausgebildet

In einer anderen Ausführungsform des erfindungsgemäßen Steges sind die Prepreginnenlage und die Prepregaußenlage L-förmig zu einer Seite hochgezogen und bilden einen im Wesentlichen L-förmig ausgebildeten Stegfuß und damit L-förmig ausgebildeten Klebeflansch aus.

In bestimmten Ausführungsformen sind T-förmige und L-förmige Stegfüsse entlang der Steglängsseite abschnittsweise miteinander kombiniert

Die Aufgabe wird in ihrem zweiten Aspekt durch ein Verfahren mit den Merkmalen des Anspruchs 10 gelöst.

Das erfindungsgemäße Verfahren eignet sich insbesondere zur Herstellung einer der für die oben genannten Rotorblätter erforderlichen Stege. Umgekehrt kann einer der oben genannten Stege durch eines der nachfolgend aufgeführten Verfahren hergestellt werden.

Erfindungsgemäß wird zunächst eine Auflagefläche einer Herstellungsform mit einer Prepregaußenlage belegt; dabei ist unter einer Prepregaußenlage zu verstehen, dass durchaus eine oder mehrere Prepregbahnen übereinandergelegt werden können.

Auf die eine Prepregaußenlage wird eine Außenseite einer Wabenplatte gelegt. Die Wabenplatte ist bereits in ihre benötigte Form gesägt. Auf eine Innenseite der Wabenplatte wird eine Prepreginnenlage gelegt. Die Prepregaußenlage und die Prepreginnenlage werden gegen die Wabenplatte gesogen und erhitzt. Dafür wird vorzugsweise ein übliches Vakuumverfahren angewendet, vorzugsweise wird der Sandwichaufbau aus Prepregaußenlage, Wabenplatte und Prepreginnenlage formabseitig mit einem Vakuumsack überlegt und der Vakuumsack an seinen Enden an der Herstellungsform luftdicht abgedichtet. Die Herstellungsform für herkömmliche Infusionsverfahren weist vorzugsweise eine elektrische Heizung auf und auch Öffnungen, um den Innenraum in einen Unterdruck zu versetzen. Das herkömmliche Infusionsverfahren ist erforderlich, um das flüssige Harz durch den Sandwichaufbau hindurchzusaugen.

Beim erfindungsgemäßen Verfahren wird jedoch kein Harz infundiert, sondern es wird lediglich die Luft soweit wie möglich aus dem Sandwichaufbau herausgesaugt, und durch den Unterdruck werden die beiden Prepreglagen auf die Innen- bzw. Außenseiten der Wabenplatten gesaugt bzw. gedrückt. Durch das zusätzliche Erhitzen und den Unterdruck wird das Harz der Prepregaußenlagen flüssig und verklebt mit den Rändern der Wabenplatten. Durch das Erhitzen härtet das Harz aus und bildet eine feste Verbindung mit den Wabenplatten aus, ohne jedoch die Waben zu durchdringen, so dass das Innere der Waben weiterhin mit Luft gefüllt bleibt.

Günstigerweise wird entlang wenigstens einer Längsseite der Wabenplatte wenigstens ein Endstück angeordnet, und die Wabenplatte und das wenigstens eine Endstück werden von einer weiteren Prepreglage umwickelt. Das Endstück kann einteilig oder mehrteilig ausgebildet sein, vorzugsweise sind entlang beider Längsseiten der Wabenplatte Endstücke angeordnet. Endstücke bestehen aus Balsaholz oder einem Schaum. Dadurch kann der Steg bequem auf die erforderliche Außenkontur gefertigt werden, um den Steg dann formschlüssig zwischen die beiden Gurte der Hauptschalen einzufügen.

Günstigerweise sind entlang der Längsseiten neben den Endstücken Füllkörper vorgesehen, vorzugsweise sind erste Füllkörper an der Außenseite des Sandwichkernes und zweite Füllkörper an der Innenseite des Sandwichkernes angeordnet. Die Füllkörper sind im Querschnitt im Wesentlichen günstigerweise dreieckförmig ausgeformt, es sind jedoch auch andere Querschnitte denkbar. Die Füllkörper sind insbesondere zur Ausbildung von im Querschnitt T-förmigen Stegfüßen vorgesehen. Der T-förmige Stegfuß dient als Klebeflansch zur Anbringung des Steges an dem Hauptgurt.

Dabei wird zunächst der Sandwichkern mit der Wabenplatte und den Endstücken vorzugsweise mit einer weiteren Prepreglage umwickelt. Dann werden die ersten und die zweiten Füllkörper auf der Außenseite und auf der Innenseite des Sandwichkernes an der fußseitigen Längskante angeordnet, und die Prepregaußenlage wird außen um den ersten Füllkörper und die Prepreginnenlage wird innen um den zweiten Füllkörper herumgelegt. Fußseitig kann über die beiden Prepreglagen und die beiden Füllkörper dann noch eine Prepregfußlage gelegt werden. Die Prepreglagen umschließen somit günstigerweise den gesamten Sandwichaufbau.

In einer anderen Ausführungsform kann auf die Füllkörper verzichtet werden. Es sind lediglich die Endstücke im Querschnitt asymmetrisch ausgebildet und insbesondere an der einen Außenseite stärker abgerundet als an der Innenseite, und die Prepregaußenlage und die eine Prepreginnenlage sind L-förmig zu einer Seite hochgezogen und bilden einen L-förmigen Klebeflansch aus.

Die Erfindung wird anhand eines Ausführungsbeispiels in drei Figuren beschrieben. Dabei zeigen:
- Fig. 1: eine perspektivische Ansicht eines erfindungsgemäßen Stegs,
- Fig. 2: den erfindungsgemäßen Steg in Fig. 1 mit einem L-förmigen Klebeflansch,
- Fig. 3: den erfindungsgemäßen Steg in Fig. 1 mit einem T-förmigen Klebeflansch.

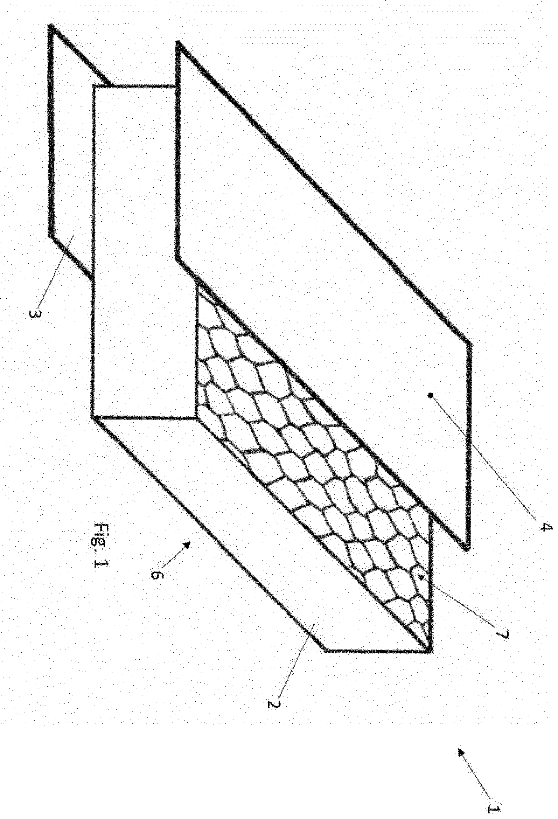

In Fig. 1 ist zunächst der prinzipielle Aufbau eines erfindungsgemäßen Stegs 1 dargestellt. Üblicherweise weisen Rotorblätter eine druckseitige und eine saugseitige Rotorblatthalbschale auf, die zur Erhöhung insbesondere ihrer Beulsteifigkeit im Inneren mit in einer Längsrichtung verlaufenden Hauptgurten und gegebenenfalls Nebengurten versehen sind, die sich einander im Innenraum des Rotorblattes gegenüberliegen. Die Rotorblatthalbschalen sind zur Ausbildung des Rotorblattes an den Rändern miteinander verklebt. Zwischen den sich gegenüberliegenden Gurten sind Stege 1 angeordnet. Die Stege 1 sind mit ihren Längsseiten, an denen Stegfüße vorgesehen sind, mit den Gurten verklebt. Die Stegfüße sind in Form von Klebeflanschen mit den Gurten verklebt und zusammenlaminiert.

Die Stege 1 weisen üblicherweise eine ebene und plane Form auf. Der erfindungsgemäße Steg 1 zeichnet sich dadurch aus, dass von der üblichen Sandwichbauweise mit einem Sandwichkern in Form eines Schaumkerns oder Balsakerns und einer Laminatschicht auf der einen Seite des Sandwichkernes und einer anderen Laminatschicht auf der anderen Seite des Sandwichkernes abgewichen wird. Ein übliches Herstellungsverfahren zur Ausbildung eines Stegs beruht darauf, in eine Herstellungsform zunächst Gewebe- oder Gelegelagen oder Vliese auf die Innenseite der Herstellungsform aufzulegen, darauf einen Schaum oder ein Balsaholz aufzulegen und auf die andere Seite des Sandwichkernes weitere Gewebe- oder Gelegelagen oder Vliese aufzulegen. Die Sandwichbauweise wird mit einem Vakuumsack abgedeckt. Der Vakuumsack wird an seinen Rändern mit der Herstellungsform verklebt, und es wird ein Vakuum in dem Vakuumsack erzeugt. In das Vakuum wird an einigen oder einer Vielzahl an Stellen Harz infundiert, das durch die Gewebe- und Gelegelagen hindurchgesogen wird und auch den Schaumkern durchdringt. Die Herstellungsform wird extern beheizt, und der mit Harz vollständig getränkte Sandwichsteg härtet aus.

Diese bekannten Stege sind schwer. Üblicherweise weisen die Schäume im ungetränkten Zustand ein Gewicht von etwa 60 kg pro m³ auf; nachdem sie mit dem Harz getränkt und ausgehärtet sind sogar Gewichte von etwa 120 kg pro m³. Da die Ermüdungslasten des Rotorblattes in Umlaufrichtung in erheblichem Maße durch die Blattlasten bestimmt sind, besteht ein Bedarf, das Blattgewicht zu verringern.

Der erfindungsgemäße Stegaufbau umfasst nunmehr einen Sandwichkern, der aus Wabenplatten 2 besteht, die auf ihrer Außenseite 6 durch eine Prepregaußenlage 3 abgedeckt sind und auf ihrer gegenüberliegenden Innenseite 7 durch eine Prepreginnenlage 4 abgedeckt und stabilisiert sind. Es entsteht der Steg 1 in einer Sandwichbauweise, wobei jedoch im Gegensatz zum Stand der Technik der Sandwichkern des Steges aus den Wabenplatten 2 besteht und die Waben auch nach der Fertigstellung und dem Aushärten des Harzes der Prepreglagen 3, 4 im Wesentlichen vollständig mit Luft gefüllt bleiben und der Sandwichkern im Wesentlichen weiterhin nur aus den Wabenplatten 2 besteht.

Die Wabenplatten 2 sind günstigerweise homogen und vollständig aus einem Kunststoff gefertigt. Wabenplatten sind im Stand der Technik bekannt. Üblicherweise bestehen die Wabenplatten aus entlang der Breite verlaufenden sechseckigen Waben, die aus einem Kunststoff wie Polypropylen PP oder Polycarbonat PC gefertigt sind. Es können jedoch auch andere Kunststoffe verwendet werden, insbesondere Kunststoffe, die mit Epoxidharzen verträglich sind.

Die Wabenplatten 2 weisen zunächst eine über ihre gesamte Ausdehnung gleichbleibende Breite auf. Sie werden zum Einbau in das Rohrblatt bzw. den Steg auf die gewünschte Form geschnitten bzw. gesägt.

Die Außenseite 6 und die Innenseite 7 der Wabenplatte 2 sind mit der Prepregaußenlage 3 bzw. der Prepreginnenlage 4 vollständig überzogen. Die Wabenplatte 2 erzeugt eine hinreichende Beulsteifigkeit und die Prepreglagen 3, 4 eine hinreichende Zugfestigkeit.

Unter Prepreg ist ein Halbzeug zu verstehen (pre-impregnated fibres). Prepregs sind mit Harz vorimprägnierte Faser- oder Gewebe- oder Gelegehalbzeuge. Prepregs werden üblicherweise als Rollenware in Form von Bahnen zur Verfügung gestellt und sind ebenfalls käuflich erwerbbar. Das Harz verflüssigt sich durch Erwärmen und unter Druck für kurze Zeit und härtet durch Wärmezufuhr aus.

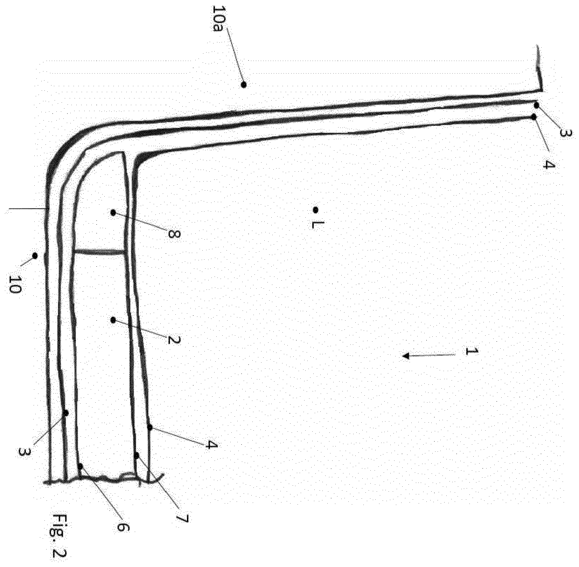

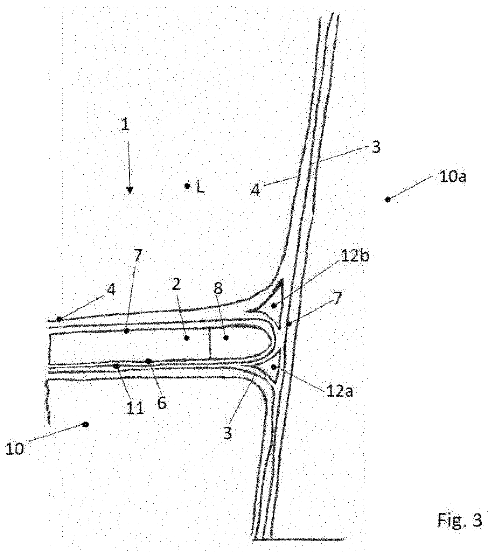

Zur Herstellung des erfindungsgemäßen Steges 1 wird zunächst auf eine herkömmliche Oberfläche einer Herstellungsform 10 gemäß Fig. 2 oder Fig. 3 die Prepregaußenlage 3 gelegt; sie kann aus mehreren Prepregbahnen bestehen. Auf die Prepregaußenlage 3 wird die Wabenplatte 2 in der vorgesägten Form mit ihrer Außenseite 6 gelegt, und auf die Innenseite 7 der Wabenplatte 2 wird die Prepreginnenlage 4 gelegt. Auch die Prepreginnenlage 4 kann aus mehreren Prepregbahnen die übereinander aufgebracht werden, bestehen.

Grundsätzlich wird das so entstehende Sandwichbauteil mit dem Vakuumsack abgedeckt, der Vakuumsack an den Kanten mit der Herstellungsform 10 luftdicht verklebt und in herkömmlicher Weise ein Vakuum in dem Vakuumsack und damit in dem Sandwichbauteil über der Herstellungsform 10 gebildet. Die Herstellungsform 10 weist zusätzlich Heizelemente auf, die sich über die gesamte Herstellungsform erstrecken und auch auf der anderen Seite der Herstellungsform durch Herabschwenken oder ähnliche Vorrichtungen zur Verfügung gestellt sind. Dadurch wird gleichzeitig der Sandwichaufbau des Steges 1 unter Unterdruck gesetzt und erhitzt, wodurch sich das Harz im Prepreg kurzzeitig verflüssigt, mit den Wabenplatten verklebt und dann aushärtet. Es entsteht der feste Steg 1 in Sandwichbauweise, wobei das Wabeninnere nicht vollständig mit Harz infundiert ist, sondern lediglich an den äußeren Rändern Harzeindringungen durch die Verklebung mit dem Prepreg ausbildet.

Die Fig. 2 und 3 zeigen zwei verschieden Formen der Stegfüße. Beide Stegfüße sind als Klebeflansch ausgebildet. Die Stege 1 werden mit den Klebeflanschen auf die Innenseite der Gurte der Rotorblatthalbschalen geklebt und dann überlaminiert.

Fig. 2 zeigt den Steg 1 mit einem L-förmigen Stegfuß während der Herstellung in der zugehörenden L-förmigen Herstellungsform 10 mit einer Formseite 10a. Zunächst wird auf die L-förmige Herstellungsform 10 und die Formseite 10a die Prepregaußenlage 3 aufgebracht, die aus einer Mehrzahl an Prepregbahnen bestehen kann. Die Herstellungsform 10 und die Formseite 10a sind in einem derartigen Winkel gegenüber dem Erdboden gehalten, dass die Prepregaußenlage 3 nicht verrutscht.

Auf die Prepregaußenlage 3 wird die Wabenplatte 2 mit ihrer Außenseite 6 aufgelegt. Entlang einer einem L-Fuß gemäß Fig. 2 zugewandten Längsseite der Wabenplatte 2 wird ein außenseitig abgerundetes Endstück 8 angeordnet, das mit der Wabenplatte 2 beidseitig fluchtet und die Wabenplatte 2 entlang ihrer gesamten Längsrichtung L abschließt. Das Endstück 8 kann aus einem Schaum oder aus Balsaholz bestehen. Das Endstück 8 ist über seine Ausdehnung in Längsrichtung L zum einen den unterschiedlichen Abständen zwischen den sich gegenüberliegenden Gurten angepasst, zum anderen ist das Endstück 8 den unterschiedlichen Winkelstellungen des Steges 1 gegenüber einer Rotorblattinnenseite angepasst. Das Endstück 8 kann als Schaum oder Balsaholz deutlich leichter in die gewünschte Form gebracht werden, und zwar durch Schleifen oder durch einfaches Andrücken, anders als es bei der Wabenplatte 2 der Fall ist, die aus einem sehr festen Kunststoffmaterial besteht und in eine Form gesägt werden muss. Der Sandwichkern des Steges 1 wird durch die Wabenplatte 2 und das Endstück 8 gebildet. Auf die Innenseite des Sandwichkernes wird die Prepreginnenlage 4 gelegt, die ebenfalls aus mehreren Prepregbahnen bestehen kann. Die Prepreginnenlage 4 und die Prepregaußenlage 3 werden an der Herstellungsform 10 L-förmig hochgezogen. Dafür weist die Herstellungsform 10 die entsprechend L-förmig abstehende Formseite 10a auf. Der L-Fuß besteht aus der Prepreginnenlage 4 und der Prepregaußenlage 3.

Auf das Sandwichbauteil sowie auf die beiden L-förmig hochgezogenen Prepreglagen 3, 4 wird ein nicht eingezeichneter Vakuumsack gelegt, der an seinen Rändern mit der Herstellungsform 10 bzw. der Formseite 10a verklebt und luftdicht abgedichtet wird. Dann wird ein Vakuum in herkömmlicher Weise in dem Vakuumsack erzeugt und die Herstellungsform durch nicht eingezeichnete Heizungen erhitzt. Durch die Erzeugung des Vakuums und das Erhitzen verflüssigt sich das Harz in den Prepreginnnen- und - außenlagen 3, 4, und das Harz verklebt mit den Wabenplatten 2. Durch das Erhitzen härtet das Harz auch aus und bildet nach dem Abkühlen den festen Steg 1 mit einem L-förmigen Klebeflansch.

In der Fig. 3 ist der Steg 1 mit einem T-förmigen Klebeflansch als Stegfuß dargestellt.

Das Herstellungsverfahren ist dem Herstellungsverfahren des Steges 1 mit L-förmigem Stegfuß recht ähnlich.

Zunächst wird wiederum eine Prepregaußenlage 3 auf die Herstellungsform 10 gelegt. Auf die Prepregaußenlage 3 wird die Wabenplatte 2 mit ihrer Außenseite 6 gelegt. Entlang einer Längskante der Wabenplatte 2 wird das vorgefertigte Endstück 8 mit der Wabenkante auf Stoß angeordnet. Auch hier hat das Endstück 8 eine vorgefertigte Form, die zum einen die unterschiedlichen Abstände zwischen den Hauptgurten ausgleicht und zum anderen auch die variierende Winkelstellung des Stegfußes gegenüber dem Steg 1 entlang der Längsrichtung L des Steges 1 ausgleicht oder diesem Rechnung trägt.

Der aus der Wabenplatte 2 und dem Endstück 8 bestehende Sandwichkern des Sandwichbauteils ist mit einer weiteren Prepreglage 11 umschlossen.

Zwischen der Prepreginnenlage 4 und der Prepregaußenlage 3 ist im Bereich des Stegfußes an der Außenseite des Sandwichkernes ein erster Füllkörper 12a angeordnet, und auf der Innenseite des Sandwichkernes ist ein zweiter 12b Füllkörper angeordnet. Auch die Füllkörper 12a, 12b erstrecken sich vorzugsweise über die gesamte Ausdehnung des Stegs 1 in Längsrichtung L. Es ist jedoch auch denkbar, dass die Füllkörper 12a, 12b entlang der Längsausdehnung unterbrochen sind, mehrteilig ausgebildet sind usw.

Über den Sandwichkern und den zweiten Füllkörper 12b ist die Prepreginnenlage 4 gezogen. Auf einer Fußseite des T-förmigen Stegfußes ist eine Prepregfußlage 13 angeordnet, die entlang der schräg gestellten Formseite 10a angeordnet wird. Die Konstellation ist in Fig. 3 dargestellt.

Über das Sandwichbauteil mit T-förmigem Klebeflansch ist wiederum ein Vakuumsack gelegt, der an den Außenseiten mit der Herstellungsform 10 und der Formseite 10a verklebt ist. Die Herstellungsform 10 und die Formseite 10a können erhitzt werden. Des Weiteren können auf der Prepreginnenlage 4 in beiden Herstellungsverfahren Heizdecken oder Heizstrahler angeordnet werden, die die Prepreginnenlage 4 erhitzen und aushärten. Durch Unterdruckbildung im Sandwichbauteil sowie Erhitzen verflüssigt sich das Harz in den Prepreglagen 3, 4, 11, 13 und verschmilzt zum einen mit den Wabenplatten 2 und dem Endstück 8 und zum anderen mit den Füllkörpern 12a, 12b und bildet so nach dem Abkühlen ein fest laminiertes Bauteil aus. Der hergestellte Steg 1 weist gegenüber herkömmlichen Stegen bei beiden Herstellungsverfahren den Vorteil auf, dass das Wabeninnere mit Luft gefüllt bleibt und nicht vollständig mit dem Harz infundiert, so dass das Bauteil insgesamt deutlich leichter wird als vollständig infundierte Stege gleicher äußerer Abmessung.

### Bezugszeichenliste

- 1: Steg
- 2: Wabenplatte
- 3: Prepregaußenlage
- 4: Prepreginnenlage

- 6: Außenseite der Wabenplatte
- 7: Innenseite der Wabenplatte
- 8: Endstück

- 10: Herstellungsform
- 10a: Formseite

- L: Längsrichtung

- 11: weitere Prepreglage
- 12a: Füllkörper
- 12b: Füllkörper
- 13: Prepregfußlage

## Patentansprüche

1. Rotorblatt mit einem Steg (1), der eine Sandwichbauweise aufweist,
**dadurch gekennzeichnet, dass** ein Sandwichkern des Stegs (1) Wabenplatten (2) aufweist und eine Außenseite (6) der Wabenplatten (2) eine Prepregaußenlage (3) aufweist und eine Innenseite (7) der Wabenplatten (2) eine Prepreginnenlage (4) aufweist.

2. Rotorblatt nach Anspruch 1,
**dadurch gekennzeichnet, dass** der Steg (1) zwischen einem auf einer Saugseite angerordneten Gurt und einem auf einer Druckseite angeordneten Gurt verläuft.

3. Rotorblatt nach Anspruch 1 oder 2,
**dadurch gekennzeichnet, dass** Waben der Wabenplatten (2) mit Luft gefüllt sind.

4. Rotorblatt nach Anspruch 1, 2 oder 3,
**dadurch gekennzeichnet, dass** sich an die Wabenplatten (2) entlang ihrer Längsseiten Endstücke (8) anschließen.

5. Rotorblatt nach einem der vorstehenden Ansprüche,
**dadurch gekennzeichnet, dass** ein Sandwichkern mit der Wabenplatte (2) und dem Endstück (8) mit einer weiteren Prepreglage (11) umschlossen ist.

6. Rotorblatt nach einem der vorstehenden Ansprüche,
**dadurch gekennzeichnet, dass** entlang einer Steglängsseite ein Stegfuß ausgebildet ist mit einem ersten und einem zweiten seitlich entlang des Endstücks (8) angeordneten Füllkörper (12a, 12b) und mit der sich innen um den zweiten Füllkörper (12b) herum erstreckenden Prepreginnenlage (4) und der sich außen um den ersten Füllkörper (12a) herum erstreckenden Prepregaußenlage (3).

7. Rotorblatt nach einem der vorstehenden Ansprüche,
**dadurch gekennzeichnet, dass** entlang einer Steglängsseite ein T-förmiger Klebeflansch mit einer sich entlang eines Abschnitts der Prepreginnenlage (4), den Füllkörpern (12a,12b) und eines Abschnitts der Prepregaußenlage (3) erstreckenden Prepregfußlage (13) ausgebildet ist.

8. Rotorblatt nach einem der vorstehenden Ansprüche,
**dadurch gekennzeichnet, dass** entlang der Steglängsseite ein L-förmiger Klebeflansch mit nebeneinander verlaufender, einen L-Fuß ausbildenden Prepreginnenlage (4) und Prepregaußenlage (3) vorgesehen ist.

9. Rotorblatt nach einem der vorstehenden Ansprüche,
**dadurch gekennzeichnet, dass** T-förmige und L-förmige Stegfüße entlang der Steglängsseite abschnittsweise miteinander kombiniert sind.

10. Verfahren zur Fertigung eines Steges (1) eines Rotorblattes, indem
auf eine Auflagefläche einer Herstellungsform (10) eine Prepregaußenlage (3) gelegt wird,
eine Wabenplatte (2) mit einer Außenseite (6) auf die Prepregaußenlage (3) gelegt wird,
und auf eine Innenseite (7) der Wabenplatte (2) eine Prepreginnenlage (4) gelegt wird
und die Prepreginnenlage (4) und die Prepregaußenlage (3) gegen die Wabenplatte (2) gesogen werden und erhitzt werden und aushärten.

11. Verfahren nach Anspruch 10,
**dadurch gekennzeichnet, dass** entlang einer Längsseite der Wabenplatte (2) wenigstens ein Endstück (8) angeordnet wird und die Wabenplatte (2) und das wenigstens eine Endstück (8) von einer weiteren Prepreglage (11) umwickelt werden.

12. Verfahren nach Anspruch 10 oder 11,
**dadurch gekennzeichnet, dass** entlang der Längseite des Sandwichkerns Füllkörper (12a, 12b) angeordnet werden.

13. Verfahren nach einem der Ansprüche 10, 11 oder 12,
**dadurch gekennzeichnet, dass** die Prepreginnenlage (4) und die Prepregaußenlage (3) als T-förmiger Klebeflansch ausgebildet werden.

14. Verfahren nach einem der Ansprüche 10 bis 13,
**dadurch gekennzeichnet, dass** das Endstück (8) an einer Außenseite stärker abgerundet ist als an einer Innenseite und die Prepreginnenlage (4) und die Prepregaußenlage (3) als L-förmiger Klebeflansch zu der Innenseite hochgezogen werden.

15. Verfahren nach einem der Ansprüche 10 bis 14,
**dadurch gekennzeichnet, dass** ein Vakuumsack über einen Sandwichaufbau gelegt wird und luftdicht an der Herstellungsform (10) und einer Formseite (10a) abgedichtet wird und ein Vakuum erzeugt wird und der Sandwichaufbau erhitzt wird.
